(19)

**Europäisches Patentamt**
**European Patent Office**
**Office européen des brevets**

(11)  **EP 2 310 114 B1**

(12)  **EUROPEAN PATENT SPECIFICATION**

(45) Date of publication and mention
of the grant of the patent:
**18.09.2013  Bulletin 2013/38**

(51) Int Cl.:
*B01D 61/06* (2006.01)     *C02F 1/44* (2006.01)

(21) Application number: **09787436.6**

(22) Date of filing: **19.05.2009**

(86) International application number:
**PCT/IL2009/000495**

(87) International publication number:
**WO 2010/004543 (14.01.2010 Gazette 2010/02)**

(54) **METHOD OF IMPROVING PERFORMANCE OF A REVERSE OSMOSIS SYSTEM FOR SEAWATER DESALINATION, AND MODIFIED REVERSE OSMOSIS SYSTEM OBTAINED THEREBY**

VERFAHREN ZUR VERBESSERUNG DER LEISTUNG EINES UMKEHROSMOSESYSTEMS FÜR MEERESWASSERENTSALZUNG UND DADURCH ERHALTENES MODIFIZIERTES UMKEHROSMOSESYSTEM

PROCÉDÉ D'AMÉLIORATION DE LA PERFORMANCE D'UN SYSTÈME D'OSMOSE INVERSE POUR LE DESSALEMENT DE L'EAU DE MER ET SYSTÈME D'OSMOSE INVERSE MODIFIÉ OBTENU PAR CE PROCÉDÉ

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority:  **09.07.2008   US 129652**

(43) Date of publication of application:
**20.04.2011   Bulletin 2011/16**

(73) Proprietor: **I.D.E. Technologies Ltd.**
**Kadima 60920 (IL)**

(72) Inventors:
  • **LIBERMAN, Boris**
    **Even Yehuda, 40500 (IL)**
  • **HEFER, David**
    **34678 Haifa (IL)**

  • **ILEVICKY-OZEL, Maya**
    **Tel-Aviv 69461 (IL)**
  • **FAIGON, Miriam**
    **44485 Kfar Saba (IL)**

(74) Representative: **Virdee-Crofts, Kulwinder Kaur et al**
    **FreshIP**
    **St. John's Innovation Centre**
    **Cowley Road**
    **Cambridge CB4 0WS (GB)**

(56) References cited:
    **WO-A-2006/106158     US-A1- 2007 181 473**
    **US-B1- 6 468 431     US-B1- 6 589 423**
    **US-B1- 6 797 173**

**Description**

**FIELD OF THE INVENTION**

This invention relates to systems for seawater desalination, and particularly to such systems using reverse osmosis (RO).

**BACKGROUND OF THE INVENTION**

There is known a process of reverse osmosis (RO) for seawater desalination, which ends in the production of product (permeate) and brine (concentrate) from the seawater, and in which high pressure pumps are used for the supply of the seawater to the system. US2007/0181473 A1 describes a water deslination installation for the desalination of seawater according to the reverse osmosis method and making use of a combination of a booster pump and a Pelton turbine for the recovery of the energy in the concentrate.Typically, the largest component of the operating cost of such process is the power required to drive the high-pressure pumps. Most of the pressure energy of the feed water flowing to the RO membranes leaves the membranes with the brine reject water. A number of devices have been developed to recover pressure energy from the brine reject stream. One example of such devices is isobaric energy recovery device (ERD), which receives the concentrate stream and fresh seawater in the same chambers and equalizes the pressure therebetween. Such a device usually increases the capacity and the maximum operating efficiency of the desalination systems.

**SUMMARY OF THE INVENTION**

According to one aspect of the present invention as described in claim 1, there is provided a method for improving performance of an conventional reverse osmosis system for seawater (SW) desalination, said system comprising: a high pressure (HP) pump having a pump input for receiving therein a SW supply having a SW flow rate $Q_w$, and a pump output for discharging therefrom said SW supply, said pump remaining the same as in the conventional system, such that $P_{PUMP'} = P_{PUMP}$, said flow rate $Q_w$ remaining substantially the same as in the conventional system, such that $Q_{w'} = Q_w$, said pump being operable by a motor and by a Pelton turbine having a turbine brine input for receiving therein, a brine having a brine flow rate $Q_B$ and a turbine brine output for discharging therefrom said brine; said motor having a conventional operation power $P_{MOTOR}$ at which the pump used to be operated before the performance of the system is improved, and a maximal operation power higher than the conventional operation power $P_{MAX}$; a reverse osmosis (RO) membrane arrangement having a RO SW input for receiving therein said SW supply, a RO permeate output for discharging therefrom a permeate having a permeate flow rate $Q_p$, and a RO brine output for discharging therefrom said brine so that $Q_W = Q_B + Q_P$; a pump hydraulic line for providing fluid communication between said pump output and said RO SW input; and a turbine hydraulic line for providing fluid communication between said RO brine output and said turbine brine input; said system further comprising an RO addition (19') to the existing RO membrane arrangement (19); the method comprising: operating the motor at a power $P_{MOTOR'}$, wherein $P_{MOTOR'} > P_{MOTOR}$ and satisfying the condition $P_{MOTOR'} \leq P_{MAX}$ calculating the power of the turbine as $P_{TURBINE'} = P_{PUMP'} - P_{MOTOR'}$; the increase permeate flow $Q_{P'}$ resulting therefrom determing the increase in size of the addition (19') to the RO arrangement (19); providing an energy recovery device (ERD) comprising an ERD brine input, an ERD brine output, an ERD SW input, and an ERD SW output; splitting new brine flow discharged from said RO brine output to a first brine flow to be received in said ERD brine input and to be discharged from said ERD brine output, and a second brine flow to be received in said turbine brine input and to be discharged from said turbine drain output, said first brine flow having a first brine flow rate $Q_{B1}$ and said second brine flow having a second brine flow rate $Q_{B2}$ being lower than said brine flow rate $Q_B$; wherein said brine flow through said turbine (17) is reduced in the modified system with respect to the brine flow through the turbine in the conventional RO system, so that $Q_{B2} < Q_B$; supplying an additional SW supply to be received in said ERD SW input and to be discharged from said ERD SW output, said supply having a supply flow rate $Q_{ADD}$ substantially equal to said first brine flow rate $Q_{B1}$; providing a booster pump having a booster pump input for receiving therein said additional SW supply from the said ERD SW output, and a booster pump output for discharging therefrom said additional SW supply; providing a ERD hydraulic line for fluid communication between said turbine hydraulic line and said ERD brine input; providing a first booster pump hydraulic line for fluid communication between said ERD SW output and said booster pump input; and providing a second booster pump hydraulic line for fluid communication between said booster pump output and said pump hydraulic line.

In accordance to another aspect of the present invention, there is provided a RO energy recovery system obtained by the method of the present invention from the conventional RO system, as described above.

## BRIEF DESCRIPTION OF THE DRAWINGS

In order to understand the invention and to see how it may be carried out in practice, embodiments will now be described, by way of non-limiting examples only, with reference to the accompanying drawings, in which:

Fig. 1 illustrates schematically a conventional RO system for seawater (SW) desalination;

Figs. 2 A and 2B illustrate schematically two examples of RO energy recovery system for seawater desalination, designed according to a method of the present invention; and

Fig. 3 is a block diagram illustrating the order of the determination of parameters of the systems shown in Figs. 2A and 2B.

## DETAILED DESCRIPTION OF EMBODIMENTS

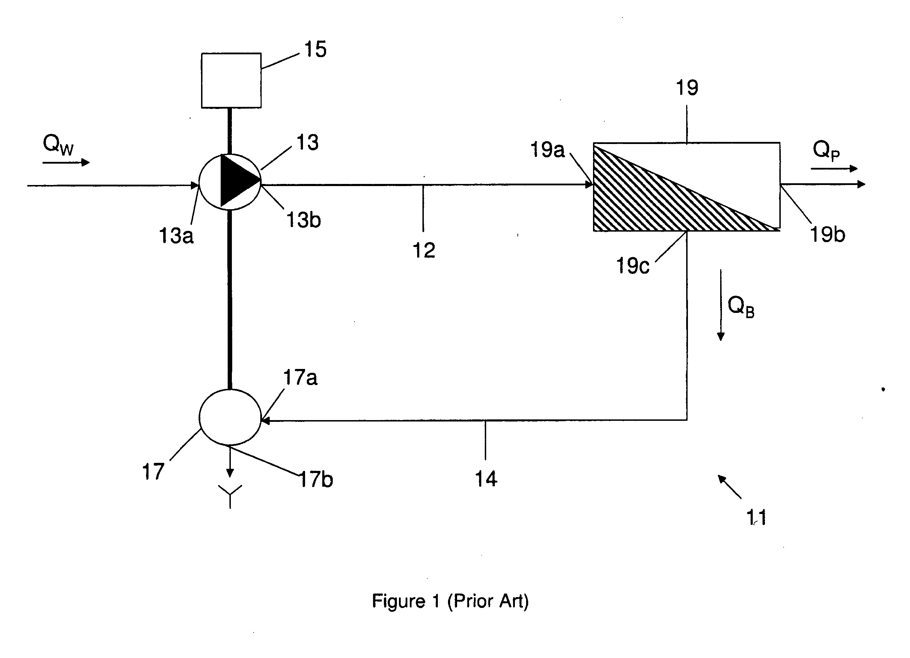

Fig. 1 illustrates schematically a conventional RO system 11 for seawater (SW) desalination, which will further be referred to as original system 11, and it will be explained how in accordance with the present invention, this system may be modified to improve its performance..

The system 11 comprises a high-pressure (HP) pump 13 having a pump input 13a and a pump output 13b, a motor 15, a turbine 17, such as, for example, a Pelton turbine, having a turbine input 17a and a turbine drain output 17b, and a RO membrane arrangement 19 having a RO input 19a, a RO permeate output 19b and a RO brine output 19c. The system 11 further comprises hydraulic lines, namely, a pump hydraulic line 12 providing a fluid communication between the pump output 13b and the RO input 19a, and a turbine hydraulic line 14 providing a fluid communication between the RO brine output 19c and the turbine input 17a.

In operation, SW having a SW flow rate $Q_W$ is supplied to the pump input 13a, pressurized by the pump 13 and supplied to the RO arrangement 19 via the hydraulic line 12, where it undergoes RO desalination process, which is known per se, does not constitute a subject of the present invention and will therefore not be described in detail herein. The desalinated water, referred to as permeate P, having a permeate flow rate $Q_P$ is discharged from the RO permeate output 19b. The concentrated salt water, referred to as brine B, having a brine flow rate $Q_B$, is discharged from the RO brine input 19c, supplied to the turbine 17 via the hydraulic line 14 and discharged therefrom, with a reduced pressure, through the turbine drain output 17b. The above mentioned flow rates satisfy the following condition: $Q_W = Q_P + Q_B$.

The motor 15 is adapted to be operated at predetermined range of power lower than a maximal, top power $P_{MAX}$, at which the motor is capable, but not planned, to be operated. The predetermined range includes a normal power, so that $P_{MOTOR} = P_{NORM}$, and a start power, so that $P_{MOTOR} = P_{START}$, satisfying the following condition: $P_{NORM} < P_{START} < P_{MAX}$, as will be explained in more detail below.

When the system 11 is already in operation, a power for the pump operation $P_{PUMP}$ is combined of the motor power $P_{MOTOR}$ and the turbine power $P_{TURBINE}$, so that $P_{PUMP} = P_{MOTOR} + P_{TURBINE}$. The contribution of the turbine 17 depends on the flow rate of the brine supplied thereto. In this condition $P_{MOTOR} = P_{NORM}$.

When the system is at its start condition, the turbine 17 is still out of operation, as no brine has yet been supplied thereto. The motor 15 is then responsible for supplying all the power required by the pump 13. Therefore, the motor is operated at its start power $P_{START}$, so that $P_{MOTOR} = P_{START}$.

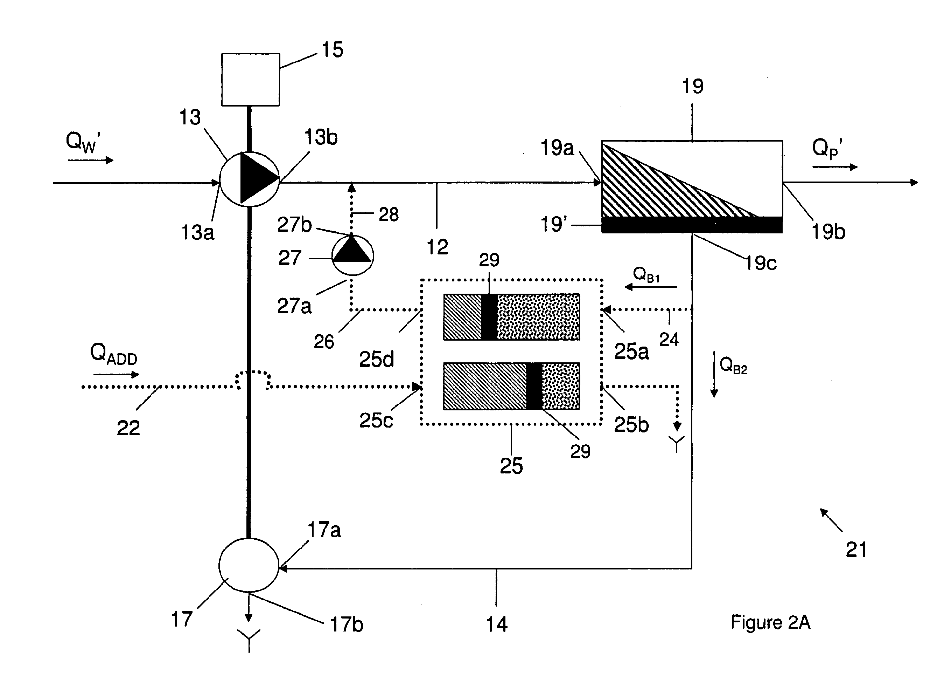

Fig. 2A illustrates schematically an example of RO energy recovery system 21 for seawater desalination, designed according to the present invention as a modification of the original RO system 11, and it will thus be further referred to as modified system 21.

The modified system 21 comprises components of the original system 11 described above, namely, the pump 13, the motor 15, the turbine 17, the RO arrangement 19 and the hydraulic lines 12 and 14.

In addition, the modified system 21 comprises an isobaric energy recovery device ERD 25 having an ERD brine input 25a, and ERD brine output 25b, an ERD SW input 25c and an ERD SW output 25d, a booster pump 27 having a booster pump input 27a and a booster pump output 27b, addition to the RO arrangement 19' and four additional hydraulic lines 22, 24, 26 and 28. The line 22 is an additional SW hydraulic line for supplying to the system via the ERD additional SW (ASW), as will be further described in detail. The line 24 is an ERD hydraulic line, providing a fluid communication between the turbine hydraulic line 14 and the ERD brine input 25a. The line 26 is booster pump first hydraulic line providing a fluid communication between the ERD SW output 25d and the booster pump input 27a. The line 28 is a booster pump second hydraulic line providing a fluid communication between the booster pump output 27b and the pump hydraulic line 12.

In operation, SW having a SW flow rate $Q_W'$ is supplied to the pump input 13a, pressurized by the pump 13 and then supplied to the RO arrangement 19 via the hydraulic line 12, where it undergoes desalination process, as in the original system. A permeate P having a flow rate $Q_P'$, is discharged from the RO permeate output 19b. A brine B, having a flow rate $Q_B$' is discharged from the RO brine output 19c and split to a first brine having a flow rate $Q_{B1}$ and a second brine having a flow rate $Q_{B2}$. The first brine is supplied to the ERD via the hydraulic line 24 and discharged therefrom through the ERD brine output 25a. The second brine is supplied to the turbine 17 via the turbine hydraulic line 14 and discharged therefrom through the turbine drain output 17b. The ASW having a flow rate $Q_{ADD}$ is supplied to the ERD via the hydraulic line 22 and then discharged therefrom via the hydraulic line 26, pressurized by the booster pump 27 and supplied to the pump hydraulic line 12 via the hydraulic line 28 to be mixed with the fresh SW.

The ERD equalizes the pressures between the first brine and the ASW. In particular, the ERD receives the high-pressure brine and the low-pressure SW and by means of a piston 29 transfers the pressure from the brine to the SW, which is described in the Background of the Invention and is known per se. Therefore, due to the mass balance, the flow rate of the first brine $Q_{B1}$ supplied to the ERD and the flow rate $Q_{ADD}$ of the ASW are substantially equal.

The booster pump 27 is a HP suction pump that compensates to the pump hydraulic line 12, pressure losses occurred in the RO arrangement 19 and the ERD 25, compared with the original pressure at the RO input 19a.

The addition 19' to the RO arrangement 19 is required since the flow through the RO arrangement 19 has been increased relative to that in the original system. The filtering capacity of this addition should be sufficient to provide the filtration of sea water having flow rate of at least $Q_{ADD}$.

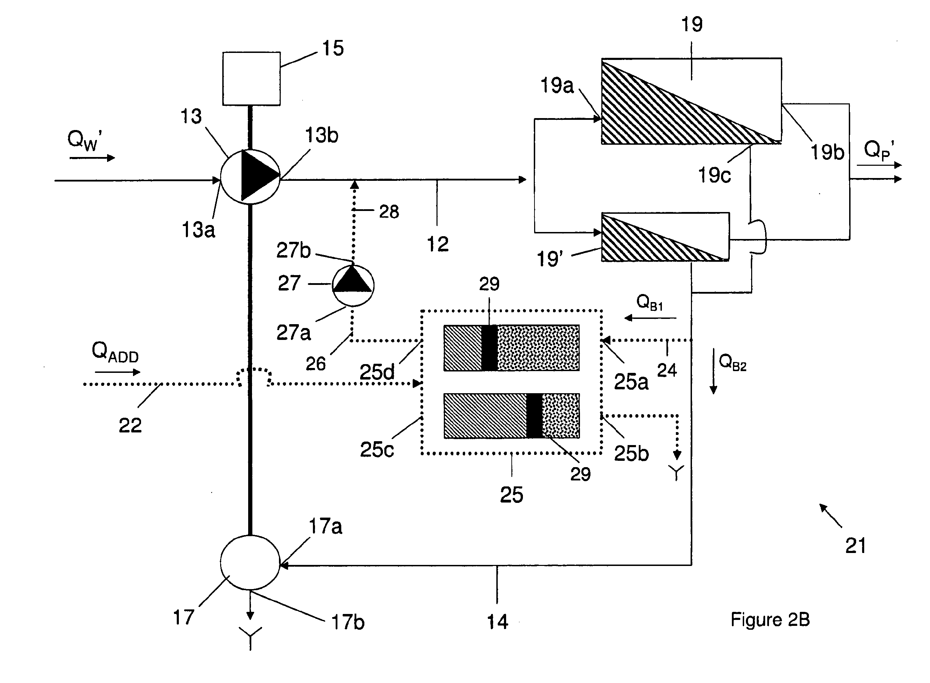

The expansion of the RO arrangement by the addition 19' may be achieved by adding new membranes to the existing RO arrangement, as shown in Fig. 2A or by adding another RO arrangement to the system, as shown in Fig. 2B. In the latter case, additional hydraulic lines may be provided

The design of the modified system 21 was based on the following considerations and conditions.. The first condition is an increase in the amount of permeate, so that $Q_{P'}>Q_P$. The second condition is a decrease in the power contributed by the turbine 17 to the motor 15, so that $P_{TURBINE}>P_{TURBINE}$'. As mentioned above, the power contributed by the turbine depends on the brine flow supplied thereto. Therefore, the brine flow through the turbine 17 in the modified system 21 has to be reduced with respect to the brine flow through the turbine 17 in the original system 11, so that $Q_{B2}<Q_B$. In the modified system 21 the motor 15 has to compensate the power previously contributed by the turbine, so as to enable the pump 13 to operate in the same way as in the original system 11. Consequently, the operation power $P_{MOTOR}$ of the motor 15 has to be increased, so that $P_{MOTOR}'>P_{MOTOR}$.

The modification method thus comprised the following two main steps:

(a) adding new components to the original system 11, namely, the ERD 25, the booster pump 27, the addition 19' to the RO arrangement 19 and the hydraulic lines 22, 24, 26 and 28; and
(b) determining and calculating the following parameters of the modified system 21: powers $P_{MOTOR}$', $P_{PUMP}$' and $P_{TURBINE}$' and the flow rates $Q_W$', $Q_P$', $Q_{B1}$, $Q_{B2}$ and $Q_{ADD}$.

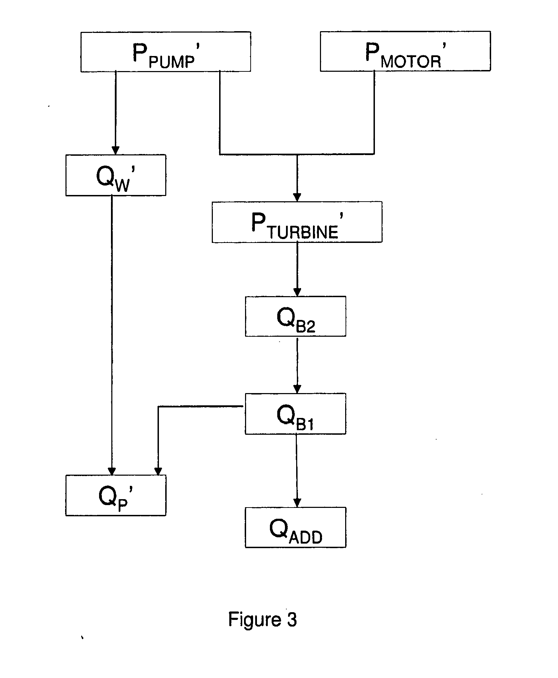

Reference is made to Fig. 3, which is a block diagram describing the parameters determination. $P_{PUMP}$' normally equals $P_{PUMP}$, since the pump 13 remains the same as in the original system 11. Therefore, the flow rate therethrough will also remain substantially the same as in the original system 11, i.e. $Q_W'=Q_W$. $P_{MOTOR}$ is increased so that $P_{MOTOR} > P_{MOTOR}$ and satisfies the following condition: $P_{NORM}< P_{MOTOR}'\leq P_{MAX}$. Normally, $P_{MOTOR}$' will not be higher than $P_{START}$.

Once $P_{PUMP}$' and $P_{MOTOR}$' are determined, $P_{TURBINE}$' is calculated from $P_{TURBINE}'=P_{PUMP}'- P_{MOTOR}'$. $P_{TURBINE}$' depends on the flow of the brine therethrough. Therefore, $Q_{B2}$ and then $Q_{B1}$ are determined.

The capacity of the ERD is determined based on the flow supplied thereto. Therefore, once $Q_{B1}$ is calculated, $Q_{ADD}$ is defined to be substantially equal thereto and ERD device is chosen to fit the above flow rates.

Based on the above rates $Q_P$' is calculated, based on which the size of the addition 19' to the RO arrangement 19 is determined.

The modified system 21 has improved performance relative to the original system 11. First, the amount of permeate is increased, so that $Q_P'>Q_P$. Second, the efficiency of the system is improved. The reason for that is that, since the turbine 17 has low efficiency relatively to the other components of the system, and the flow therethough suffers from high energy losses, the lower the flow therethrough, the lower the losses. In the modified system the brine flow through the turbine is decreased since $Q_{B2}<Q_B$. Consequently, the energy losses caused by the turbine 17 are decreased. At the same time, part of the flow, i.e. the second brine with the flow rate $Q_{B1}$ is supplied to the ERD 25, which is more efficient than the turbine 17.

It should be noted that all the above is achieved only by adding two new components to the original system, i.e. the ERD and the RO addition 19', and some some hydraulic lines, without the need of replacement of any the exciting components of the original system 11.

**Example**

In the original system 11:

Pump power requirement is calculated as follows:

$$P_{PUMP} = \frac{Q_W \cdot TDH_{PUMP}}{36 \cdot E_{PUMP}}$$

where $TDH_{PUMP}$ is total dynamic head of the pump, and $E_{PUMP}$ is the pump efficiency. Values of the above parameters used in the present example are:

$$Q_W = 800 \frac{m^3}{h}$$

$$TDH_{PUMP} = 65 BARG$$

$$E_{PUMP} = 84\%$$

$$P_{PUMP} = \frac{800 \cdot 65}{36 \cdot 0.84} = 1719.6 kW$$

Power supplied by the turbine is calculated as follows:

$$P_{TURBINE} = \frac{Q_B \cdot TDH_{TURBINE}}{36} \cdot E_{TURBINE}$$

$$Q_B = Q_W - Q_P$$

where $TDH_{TURBINE}$ is total dynamic head of the turbine, and $E_{TURBINE}$ is the turbine efficiency.
Values of the above parameters are:

$$Q_P = 0.48 Q_W = 384 \frac{m^3}{h} \Rightarrow Q_B = 800 - 384 = 416 \frac{m^3}{h}$$

$$TDH_{TURBINE} = 70 BARG$$

$$E_{TURBINE} = 87\%$$

$$P_{TURBINE} = \frac{416 \cdot 70}{36} \cdot 0.87 = 703.7 kW$$

Power supplied by the motor is calculated as follows:

$$P_{MOTOR} = P_{PUMP} - P_{TURBINE} = 1719.6 - 703.7 = 1015.9 kW$$

In the modified system 21:

$$P_{PUMP} = P_{PUMP}'$$

Power supplied by the motor is:

$$P_{MOTOR} = 1300 kW$$

Power supplied by the turbine is:

$$P_{TURBINE} = P_{PUMP} - P_{MOTOR} = 1719.6 - 1300 = 419.6 kW$$

Brine flow rate through the turbine is:

$$Q_{B2} = \frac{P_{TURBINE}}{TDH_{TURBINE} \cdot E_{TURBINE}} \cdot 36 = \frac{419.6}{70 \cdot 0.87} \cdot 36 = 248 \frac{m^3}{h}$$

Brine flow rate through the ERD is calculated as follows:

$$Q_B + 0.52 Q_{ADD} = Q_{B1} + Q_{B2}$$

$$Q_{ADD} = Q_{B1}$$
$$\Rightarrow 416 + 0.52 \cdot Q_{B1} = Q_{B1} + 248$$
$$\Rightarrow Q_{B1} = 350 \frac{m^3}{h}$$

The permeate flow rate is:

$$Q_P' = Q_P + 0.52 Q_{ADD} = 384 + 0.48 \cdot 350 = 552 \frac{m^3}{h}$$

The improvements of the modified system 21, as discussed above, are clearly shown in the above example. $Q_P = 384 \frac{m^3}{h}$ and $Q_P = 552 \frac{m^3}{h}$ , therefore, $Q_P' > Q_P$. In addition, the brine flow through the turbine 17 in the

modified system 21 $(Q_{B2} = 248\frac{m^3}{h})$, is lower than the brine flow through the turbine 17 in the original system 11

$(Q_B = 416\frac{m^3}{h})$. Therefore, less power is contributed by the turbine ($P_{TURBINE'}$<$P_{TURBINE}$) and less energy losses are caused.

Those skilled in the art to which this invention pertains will readily appreciate that numerous changes, variations, and modifications can be made without departing from the scope of the invention.

## Claims

1. A method for improving performance of a conventional reverse osmosis system (11) for seawater (SW) desalination, said system (11) comprising:

a high pressure (HP) pump (13) having a pump input (13a) for receiving therein a SW supply having a SW flow rate $Q_w$, and a pump output for discharging therefrom said SW supply, said pump remaining the same as in the conventional system, such that $P_{PUMP'}$ = $P_{PUMP}$, said flow rate $Q_w$ remaining substantially the same as in the conventional system, such that $Q_{w'}$ = $Q_w$ said pump (13) being operable by a motor (15) and by a Pelton turbine (17) having a turbine brine input (17a) for receiving therein, a brine having a brine flow rate $Q_B$ and a turbine brine output (17b) for discharging therefrom said brine; said motor (15) having a conventional operation power $P_{MOTOR}$ at which the pump used to be operated before the performance of the system is improved, and a maximal operation power higher than the conventional operation power $P_{MAX}$;

a reverse osmosis (RO) membrane arrangement (19) having a RO SW input (19a) for receiving therein said SW supply, a RO permeate output (19b) for discharging therefrom a permeate having a permeate flow rate $Q_P$, and a RO brine output (19c) for discharging therefrom said brine so that $Q_W = Q_B + Q_P$; a pump hydraulic line (12) for providing fluid communication between said pump output (13b) and said RO SW input (19a); and a turbine hydraulic line (14) for providing fluid communication between said RO brine output (19c) and said turbine brine input (17a); said system further comprising an RO addition (19') to the existing RO membrane arrangement (19); the method comprising:

operating the motor (15) at a power $P_{MOTOR}$', wherein $P_{MOTOR}$' > $P_{MOTOR}$; and satisfying the condition $P_{MOTOR}$'≤$P_{MAX}$;
calculating the power of the turbine as $P_{TURBINE'}$ = $P_{PUMP'}$ - $P_{MOTOR'}$;
the increase permeate flow $Q_{P'}$ resulting therefrom determing the increase in size of the addition (19') to the RO arrangement (19);
providing an energy recovery device (ERD) (25) comprising an ERD brine input (25a), an ERD brine output (25b), an ERD SW input (25c), and an ERD SW output (25d);
splitting new brine flow discharged from said RO brine output (19c) to a first brine flow to be received in said ERD brine input (25a) and to be discharged from said ERD brine output (25b), and a second brine flow to be received in said turbine brine input (17a) and to be discharged from said turbine drain output (17b), said first brine flow having a first brine flow rate $Q_{B1}$ and said second brine flow having a second brine flow rate $Q_{B2}$ being lower than said brine flow rate $Q_B$, wherein said brine flow through said turbine (17) is reduced in the modified system with respect to the brine flow through the turbine in the conventional RO system, so that $Q_{B2} < Q_B$;
supplying an additional SW supply to be received in said ERD SW input (25c) and to be discharged from said ERD SW output (25d), said supply having a supply flow rate $Q_{ADD}$ substantially equal to said first brine flow rate $Q_{B1}$;
providing a booster pump (27) having a booster pump input (27a) for receiving therein said additional SW supply from the said ERD SW output (25d), and a booster pump output (27b) for discharging therefrom said additional SW supply;
providing a ERD hydraulic line (24) for fluid communication between said turbine hydraulic line (14) and said ERD brine input (25a);
providing a first booster pump hydraulic line (26) for fluid communication between said ERD SW output (25d) and said booster pump input (27a); and
providing a second booster pump hydraulic line (28) for fluid communication between said booster pump output (27b) and said pump hydraulic line (12).

2. A method according to Claim 1, further adding to said RO arrangement new membranes for supplying thereto SW having a flow rate at least equal to $Q_{ADD}$.

3. A method according to Claims 1 or 2, further adding to said system an additional RO arrangement for supplying thereto SW having a flow rate at least equal to $Q_{ADD}$.

4. A method according to anyone of Claims 1 to 3, further comprising producing a new permeate discharged from said RO permeate output, said new permeate having a new permeate flow rate $Q_{p'}$ at least equal to said permeate flow rate $Q_p$.

5. A RO energy recovery system (21) obtained by a method according to any one of Claims 1 to 4, from a conventional RO for seawater (SW) desalination (11).

6. The reverse osmosis (RO) system (21) of claim 5, wherein the supply flow rate $Q_{ADD}$ is substantially equal to the first brine flow rate $Q_{B1}$.


**Patentansprüche**

1. Verfahren zum Verbessern der Leistung eines herkömmlichen Umkehrosmosesystems (11) zur Meerwasserentsalzung (SW), wobei das genannte System (11) Folgendes umfasst:

eine Hochdruck-(HP)-Pumpe (13) mit einem Pumpeneingang (13a) zum Aufnehmen eines SW-Zuflusses mit einer SW-Durchflussrate $Q_W$ und einem Pumpenausgang, um den genannten SW-Zufluss daraus abzulassen, wobei die genannte Pumpe dieselbe bleibt wie in dem herkömmlichen System, so dass $P_{PUMP'} = P_{PUMP}$ ist, wobei die genannte Durchflussrate $Q_W$ im Wesentlichen dieselbe bleibt wie im herkömmlichen System, so dass $Q_{W'} = Q_W$ ist, wobei die genannte Pumpe (13) von einem Motor (15) und einer Pelton-Turbine (17) mit einem Turbinenlakeeingang (17a) betrieben werden kann, um darin eine Lake mit einer Lakedurchflussrate $Q_B$ aufzunehmen, und einem Turbinenlakeausgang (17b), um die genannte Lake daraus abzulassen; wobei der genannte Motor (15) eine herkömmliche Betriebsleistung $P_{MOTOR}$ hat, mit der die Pumpe vor dem Verbessern der Leistung des Systems betrieben wurde, und eine maximale Betriebsleistung, die höher ist als die herkömmliche Betriebsleistung $P_{MAX}$;
eine Umkehrosmose-(RO)-Membrananordnung (19) mit einem RO-SW-Eingang (19a) zum Aufnehmen des genannten SW-Zuflusses, einem RO-Permeatausgang (19b), um daraus ein Permeat mit einer Permeatdurchflussrate $Q_P$ abzulassen, und einem RO-Lakeausgang (19c), um die genannte Lake daraus abzulassen, so dass $Q_W = Q_B + Q_P$ ist; eine Pumpenhydraulikleitung (12) zum Herstellen einer Fluidverbindung zwischen dem genannten Pumpenausgang (13b) und dem genannten RO-SW-Eingang (19a); und eine Turbinenhydraulikleitung (14) zum Herstellen einer Fluidverbindung zwischen dem genannten RO-Lakeausgang (19c) und dem genannten Turbinenlakeeingang (17a); wobei das genannte System ferner einen RO-Zusatz (19') zur existierenden RO-Membrananordnung (19) umfasst; wobei das Verfahren Folgendes beinhaltet:

Betreiben des Motors (15) mit einer Leistung $P_{MOTOR'}$, wobei $P_{MOTOR'} > P_{MOTOR}$ ist;
und Erfüllen der Bedingung $P_{MOTOR'} \leq P_{MAX}$;
Berechnen der Leistung der Turbine als $P_{TURBINE'} = P_{PUMP'} - P_{MOTOR'}$;
wobei der davon resultierende höhere Permeatdurchfluss $Q_{P'}$ die Zunahme der Größe des Zusatzes (19') zur RO-Anordnung (19) bestimmt;
Bereitstellen einer Energierückgewinnungsvorrichtung (ERD) (25), die einen ERD-Lakeeingang (25a), einen ERD-Lakeausgang (25b), einen ERD SW Eingang (25c) und einen ERD SW Ausgang (25d) umfasst;
Unterteilen des von dem genannten RO-Lakeausgang (19c) abgelassenen neuen Lakeflusses in einen ersten Lakefluss, der in dem genannten ERD-Lakeeingang (25a) aufgenommen und aus dem genannten ERD-Lakeausgang (25b) abgelassen werden soll, und einen zweiten Lakedurchfluss, der in dem genannten Turbinenlakeeingang (17a) aufgenommen und aus dem genannten Turbinenablaufausgang (17b) abgelassen werden soll, wobei der genannte erste Lakefluss eine erste Lakedurchflussrate $Q_{B1}$ hat und der genannte zweite Lakefluss eine zweite Lakedurchflussrate $Q_{B2}$ hat, die niedriger ist als die genannte Lakedurchflussrate $Q_B$, wobei der genannte Lakedurchfluss durch die genannte Turbine (17) in dem modifizierten System mit Bezug auf den Lakedurchfluss durch die Turbine im herkömmlichen RO-System reduziert ist, so das $Q_{B2} < Q_B$ ist;
Zuführen eines zusätzlichen SW-Zuflusses, der in dem genannten ERD SW Eingang (25c) aufgenommen und aus dem genannten ERD SW Ausgang (25d) abgelassen werden soll, wobei der genannte Zufluss eine Zuflussrate $Q_{ADD}$ hat, die im Wesentlichen gleich der ersten Lakedurchflussrate $Q_{B1}$ ist;

Bereitstellen einer Booster-Pumpe (27) mit einem Booster-Pumpeneingang (27a), um darin den genannten zusätzlichen SW-Zufluss von dem genannten ERD SW Ausgang (25d) aufzunehmen, und einem Booster-Pumpenausgang (27b), um den genannten zusätzlichen SW-Zufluss daraus abzulassen;

Bereitstellen einer ERD-Hydraulikleitung (24) für eine Fluidverbindung zwischen der genannten Turbinenhydraulikleitung (14) und dem genannten ERD-Lakeeingang (25a);

Bereitstellen einer ersten Booster-Pumpen-Hydraulikleitung (26) für eine Fluidverbindung zwischen dem genannten ERD SW Ausgang (25d) und dem genannten Booster-Pumpeneingang (27a); und

Bereitstellen einer zweiten Booster-Pumpen-Hydraulikleitung (28) für eine Fluidverbindung zwischen dem genannten Booster-Pumpenausgang (27b) und der genannten Pumpenhydraulikleitung (12).

2. Verfahren nach Anspruch 1, das ferner das Hinzufügen von neuen Membranen zu der genannten RO-Anordnung beinhaltet, um SW mit einer Durchflussrate von wenigstens gleich $Q_{ADD}$ zuzuführen.

3. Verfahren nach Anspruch 1 oder 2, das ferner das Hinzufügen einer zusätzlichen RO-Anordnung zu dem genannten System beinhaltet, um SW mit einer Durchflussrate von wenigstens gleich $Q_{ADD}$ zuzuführen.

4. Verfahren nach einem der Ansprüche 1 bis 3, das ferner das Erzeugen eines neuen Permeats beinhaltet, das aus dem genannten RO-Permeatausgang abgelassen wurde, wobei das genannte neue Permeat eine neue Permeatdurchflussrate $Q_{P'}$ hat, die wenigstens gleich der genannten Permeatdurchflussrate $Q_P$ ist.

5. RO-Energierückgewinnungssystem (21), das mit einem Verfahren nach einem der Ansprüche 1 bis 4 erhalten wird, von einer herkömmlichen RO zur Salzwasser-(SW)-Entsalzung (11).

6. Umkehrosmose-(RO)-System (2) nach Anspruch 5, wobei die Zuflussrate $Q_{ADD}$ im Wesentlichen gleich der ersten Lakedurchflussrate $Q_{B1}$ ist.

## Revendications

1. Un procédé d'amélioration de la performance d'un système d'osmose inverse conventionnel (11) pour le dessalement de l'eau de mer (EM), ledit système comprenant :

une pompe haute pression (HP) ayant une entrée de pompe (13a) pour recevoir une alimentation en EM ayant un débit d'EM $Q_W$, et une sortie de pompe pour décharger ladite alimentation en EM, ladite pompe demeurant la même que dans le système conventionnel, c'est-à-dire que $P_{POMPE'} = P_{POMPE}$, ledit débit $Q_W$ demeurant essentiellement le même que dans le système conventionnel, c'est-à-dire que $Q_{W'} = Q_W$, ladite pompe (13) étant actionnée par un moteur (15) et par une turbine Perton (17) ayant une entrée de saumure de turbine (17a) pour recevoir une saumure ayant un débit de saumure $Q_B$ et une sortie de saumure de turbine (17b) pour décharger ladite saumure ; ledit moteur (15) ayant une puissance de fonctionnement conventionnelle $P_{MOTEUR}$ à laquelle la pompe était actionnée avant que la performance du système ne soit améliorée, et une puissance de fonctionnement maximale supérieure à la puissance de fonctionnement conventionnelle $P_{MAX}$ ;

un dispositif à membrane d'osmose inverse (OI) (19) ayant une entrée d'EM par OI (19a) pour recevoir ladite alimentation en EM, une sortie de perméat d'OI (19b) pour décharger un perméat ayant un débit de perméat $Q_p$, et une sortie de saumure d'OI (19c) pour décharger ladite saumure de sorte que $Q_W = Q_B + Q_P$ ; un conduit hydraulique de pompe (12) pour assurer la communication du fluide entre ladite sortie de pompe (13b) et ladite entrée d'EM par OI (19a) ; et un conduit hydraulique de turbine (14) pour assurer la communication du fluide entre ladite sortie de saumure d'OI (19c) et ladite entrée de saumure de turbine (17a) ; ledit système comprenant en outre une addition d'OI (19') au dispositif à membrane d'OI existant (19), le procédé comprenant :

faire fonctionner le moteur (15) à une puissance $P_{MOTEUR'}$, où $P_{MOTEUR'} > P_{MOTEUR}$ et satisfaire à la condition $P_{MOTEUR'} \leq P_{MAX}$ ;

calculer la puissance de la turbine $P_{TURBINE'} = P_{POMPE'} - P_{MOTEUR'}$ ;

le courant de perméat augmenté $Q_{P'}$ qui en résulte détermine l'augmentation en taille de l'addition (19') au dispositif à OI (19) ;

procurer un dispositif de récupération d'énergie (DRE) (25) comprenant une entrée de saumure de DRE (25a), une sortie de saumure de DRE (25b), une entrée d'EM de DRE (25c) et une sortie d'EM de DRE (25d) ;

diviser le nouveau courant de saumure déchargé par ladite sortie de saumure d'OI (19c) en un premier courant de saumure qui est reçu dans ladite entrée de saumure de DRE (25a) et est déchargé par ladite sortie de saumure de DRE (25b) et un second courant de saumure qui est reçu dans ladite entrée de saumure de turbine (17a) et est déchargé par ladite sortie d'évacuation de turbine (17b), ledit premier courant de saumure ayant un premier débit de saumure $Q_{B1}$ et ledit second courant de saumure ayant un second débit de saumure $Q_{B2}$ qui est inférieur audit débit de saumure $Q_B$, où ledit courant de saumure passant dans ladite turbine (17) est réduit dans le système modifié par rapport au courant de saumure passant dans la turbine dans le système conventionnel d'OI, de sorte que $Q_{B2} < Q_B$ ;

fournir une alimentation supplémentaire en EM qui est reçue dans ladite entrée d'EM de DRE (25c) et est déchargée par ladite sortie d'EM de DRE (25d), ladite alimentation ayant un débit d'alimentation $Q_{ADD}$ essentiellement égal audit premier débit de saumure $Q_{B1}$ ;

procurer une pompe de surpression (27) ayant une entrée de pompe de surpression (27a) pour recevoir ladite alimentation supplémentaire en EM de ladite sortie de EM de DRE (25d) et une sortie de pompe de surpression (27b) pour décharger ladite alimentation supplémentaire en EM ;

procurer un conduit hydraulique de DRE (24) pour la communication du fluide entre ledit conduit hydraulique de turbine (14) et ladite entrée de saumure de DRE (25a) ;

procurer un premier conduit hydraulique de pompe de surpression (26) pour la communication du fluide entre ladite sortie d'EM de DRE (25d) et ladite entrée de pompe de surpression (27a) ; et

procurer un second conduit hydraulique de pompe de surpression (28) pour la communication du fluide entre ladite sortie de pompe de surpression (27b) et ledit conduit hydraulique de pompe (12).

2. Un procédé selon la revendication 1, ajoutant en outre audit dispositif d'OI de nouvelles membranes pour une alimentation en EM ayant un débit au moins égal à $Q_{ADD}$.

3. Un procédé selon la revendication 1 ou 2, ajoutant en outre audit système un dispositif additionnel d'OI pour une alimentation en EM ayant un débit au moins égal à $Q_{ADD}$.

4. Un procédé selon l'une quelconque des revendications 1 à 3, comprenant en outre la production d'un nouveau perméat déchargé par ladite sortie de perméat d'OI, ledit nouveau perméat ayant un nouveau débit de perméat $Q_{p'}$ au moins égal audit débit de perméat $Q_p$.

5. Un dispositif de récupération d'énergie d'OI (21) obtenu par un procédé selon l'une quelconque des revendications 1 à 4, par une OI conventionnelle pour le dessalement de l'eau de mer (EM), (11).

6. Le système d'osmose inverse (OI) (21) de la revendication 5, où le débit d'alimentation $Q_{ADD}$ est essentiellement égal au premier débit de saumure $Q_{B1}$.

Figure 1 (Prior Art)

Figure 2A

Figure 2B

Figure 3

**EP 2 310 114 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070181473 A1